# EUROPÄISCHE PATENTSCHRIFT

(11) **EP 2 165 927 B1**
(45) Veröffentlichungstag und Bekanntmachung des Hinweises auf die Patenterteilung: **28.03.2012**
(21) Anmeldenummer: 09010713.7
(22) Anmeldetag: 20.08.2009
(51) Int. Cl.: B62M 9/10

(54) **Mehrfachritzelanordnung mit Hohlkörper**
Multiple bevel assembly with hollow bodies
Système de pignon multiple doté d'un corps creux

(30) Priorität: 22.09.2008 DE 102008048371
(43) Veröffentlichungstag der Anmeldung: 24.03.2010
(73) Patentinhaber: SRAM Deutschland GmbH, 97424 Schweinfurt (DE)
(72) Erfinder: Braedt, Henrik, 97076 Würzburg (DE)

(56) Entgegenhaltungen:
- EP-A2- 1 964 769
- FR-A1- 2 611 642
- US-A- 5 503 600

## Beschreibung

Die Erfindung betrifft ein Mehrfach-Kettenzahnrad mit unterschiedlich großen Zahnkränzen zur Aufnahme einer Kette und zur Übertragung einer von dieser eingeleiteten Umfangkraft auf eine Nabe eines Hinterrades eines Fahrrades mit der Möglichkeit, die Kette durch eine Schalteinrichtung von einem auf einen anderen Zahnkranz zu wechseln, wobei mehrere Zahnkränze durch rohrförmige Elemente einstückig miteinander verbunden sind und ein gestuftes kegelförmiges Hohlteil bilden.

Bei dieser vorgenannten Kassette hat sich gezeigt, dass infolge der Anordnung der Zähne des größten Ritzels am Hohlkörper störende Verformungen auftreten können.

Die Zähne des größten Ritzels sind am axialen Ende des kegelförmigen Hohlkörpers angeordnet und dadurch nur an einer axialen Seite abgestützt. Im Gegensatz dazu werden die Zähne kleinerer Ritzel, die sich an der axialen Position eines scheibenförmigen Tragelementes befinden, an beiden axialen Seiten abgestützt durch rohrförmige Tragelemente. Das scheibenförmige Tragelement gemeinsam mit den beiden rohrförmigen Tragelementen ergibt eine stabilere Anordnung.

Infolge der lediglich einseitigen Abstützung des größten Ritzels kann ein partielles Aufweiten des kegelförmigen Hohlkörpers am Ende mit dem größten Durchmesser eintreten, wobei sich die Zähne hin zum kleineren Ritzel neigen. Ein solches partielles Aufweiten kann bei der spanenden Bearbeitung durch eine Drehoperation und auch bei der notwendigen Wärmebehandlung eintreten.

Derselbe negative Effekt stellt sich ein, wenn eine Kettenzugskraft an den Zähnen des größten Ritzels am Hohlkörper angreift. Die Kettenzugskraft am größten Ritzel wirkt nicht in der Ebene des größten Ritzels, sondern aus dieser Ebene heraus in Richtung des kleineren Ritzels. Es wirkt eine Biegekraft auf die Zähne, die bestrebt ist, die Zähne hin zum kleineren Ritzel zu verformen. Somit überlagern sich hier zwei ungünstige Effekte.

Gegen diese Tendenz bietet das Einpressen eines Deckels als eine Möglichkeit für das Fügen dieser Teile keinen Ansatz.

Das Patent US 5,503,60 ist der nächstkommende vorveröffentlichte Stand der Technik und offenbart alle Merkmale des Oberbegriffes von Anspruch 1.

Mehrere Ritzel bilden zusammen mit 3 Stützarmen einen durchbrochenen Hohlkörper von konischer Gestalt, bei dem die einzelnen Ritzel demontierbar mit den Stützarmen verbunden sind. Das größte Ritzel ist so ausgebildet, dass es sich gegenüber der Radnabe abstützt und das eine Ende der Stützarme auf dem größeren Radius-Niveau fixiert, während sich die Enden der Stützarme mit geringerem Radius-Niveau direkt nach radial innen abstützen.

Das Dokument EP 1 064 769 A2 offenbart eine Mehrfach-Ritzelanordnung, in der die einzelnen Ritzel auf einem Tragkörper fixiert sind, der einen Grundkörper aufweist, der auf einen Antreiber einer Hinterradnabe aufgeschoben wird. Ausgehend von diesem Grundkörper erstrecken sich schräg nach radial außen mehrere Tragarme, die nur an dieser einen Verbindungsstelle mit dem Grundkörper verbunden sind.

In der Lösung der Erfindung werden die Zähne des größten Ritzels an einem Übertragungselement angeordnet, das den kegelförmigen Hohlkörper am Ende seines größten Durchmessers nach radial außen abstützt und außerdem axial fixiert. Damit ergibt sich eine stabile Anordnung für die Zähne des größten Ritzels.

In einer vorteilhaften Weiterentwicklung der Erfindung wird das Übertragungselement so ausgestaltet wird, dass bei angreifender Kettenzugskraft eine Tendenz zum Aufspreizen des Übertragungselementes in radialer Richtung eintritt. Das kann durch das Vorsehen von geneigten Armen geschehen, die von radial innen nach außen entgegen der Antriebsdrehrichtung A geneigt sind.

Die Figuren zeigen:
- Fig. 1: einstückiger Ritzelsatz aus dem Stand der Technik
- Fig. 2: Ritzelsatz nach Fig. 1 in einer Schnitt-Darstellung
- Fig. 3: eine Ausführungsform des erfindungsgemäßen kegelförmigen Hohlkörpers

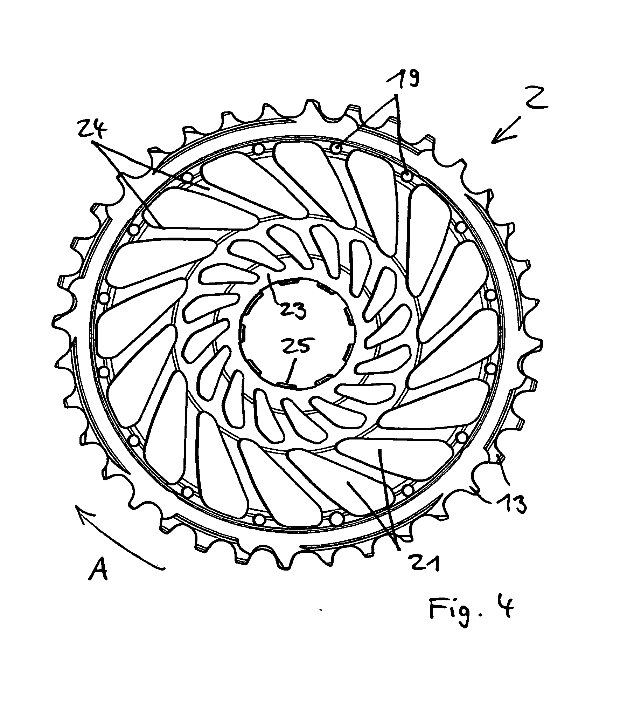

- Fig. 4: eine Ausführungsform eines erfindungsgemäßen Übertragungselementes
- Fig. 5: Ausschnitt von erfindungsgemäßem kegelförmigen Hohlkörper und erfindungsgemäßen Übertragungselemente im montierten Zustand

Aufbau und Wirkungsweise einer Ausführungsform der erfindungsgemäßen Ritzelanordnung werden im Folgenden anhand der Figuren beschrieben.

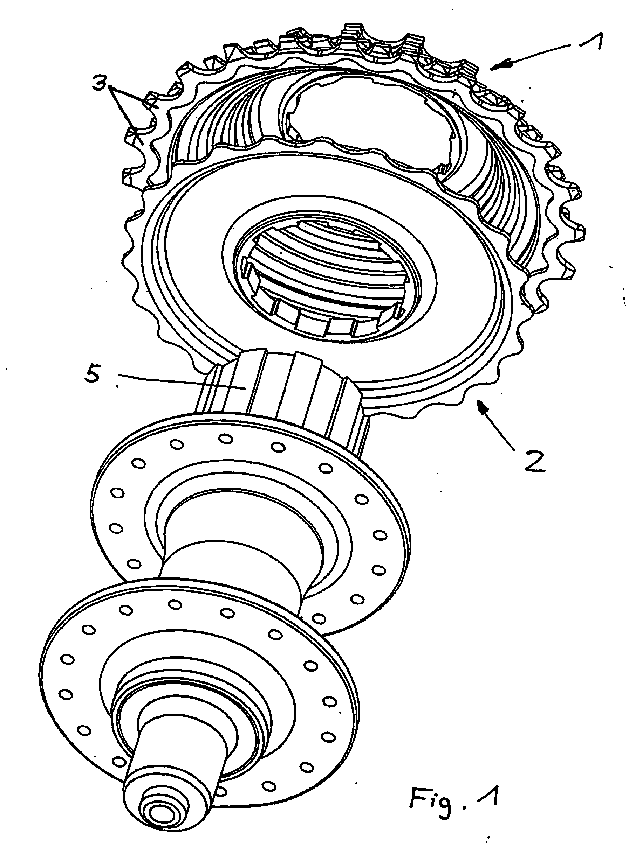

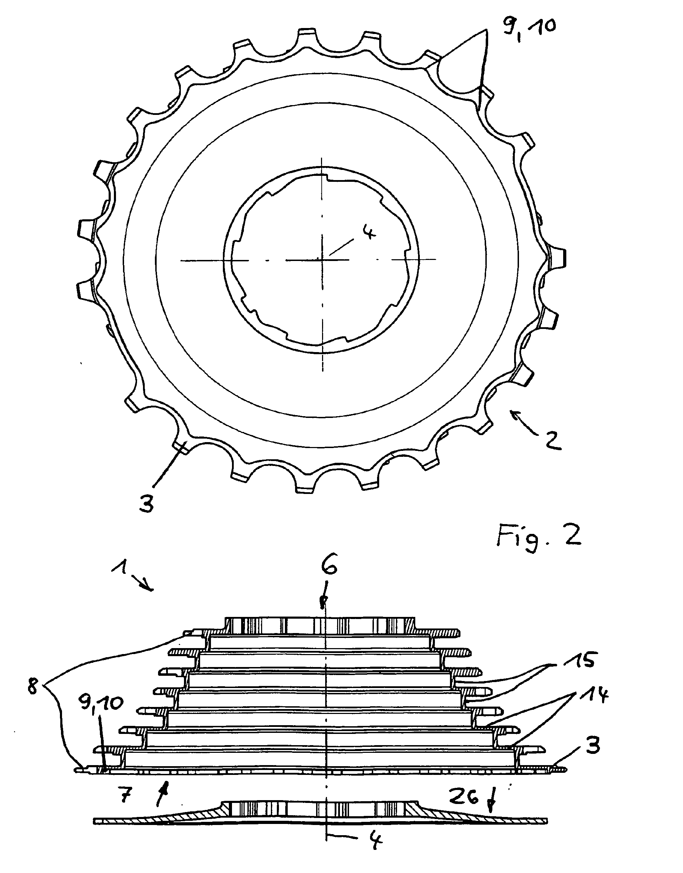

Die Figuren 1 und 2 zeigen eine Mehrfach-Ritzelanordnung entsprechend des Oberbegriffes von Anspruch 1.

Ein Hohlkörper 1 mit der Form eines gestuften Kegelstumpfes setzt sich zusammen aus einer alternierenden Aneinanderreihung von scheibenförmigen Tragelementen 14 und rohrförmigen Tragelementen 15 und weist eine erste Öffnung 6 und eine zweite Öffnung 7 auf, die koaxial zur Mittelachse des Hohlkörpers jeweils im Bereich einer Lagerbasis für den Hohlkörper 2 angeordnet sind. An jeder Lagerbasis befindet sich zumindest ein Abstützprofil 10. An mindestens einer Lagerbasis ist ein Mitnahmeprofil 9 ausgebildet. Die gesamte Mehrfachritzel-Anordnung ist vorgesehen für eine Montage auf einer Antreiberanordnung 5 an einer Nabe eines Fahrrades. Der Antreiber ist drehbar gegenüber der Achse der Nabe gelagert, wobei eine Freilaufanordnung zwischen Antreiber und Nabenhülse vorgesehen sein kann.

Die Abstützprofile 10 dienen dazu, den Hohlkörper 1 gegenüber der Antreiberanordnung 5 und indirekt gegenüber der Nabenachse radial abzustützen. Das Drehmoment wird von der an der Verzahnung 3 eines Ritzels angreifenden Rollenkette erzeugt. Der Hohlraum im Hohlkörper 1 wird durch ein Deckelelement 23 begrenzt, das an dem Abstütz- und Mitnahmeprofil 9, 10 am Hohlkörper 1 angreift und den Hohlkörper 1 gegenüber der Antreiberanordnung 5 in radialer und axialer Richtung fixiert. Das Mitnahmeprofil 9 dient der Übertragung eines Drehmomentes vom Hohlkörper 2 auf das Deckelelement 25.

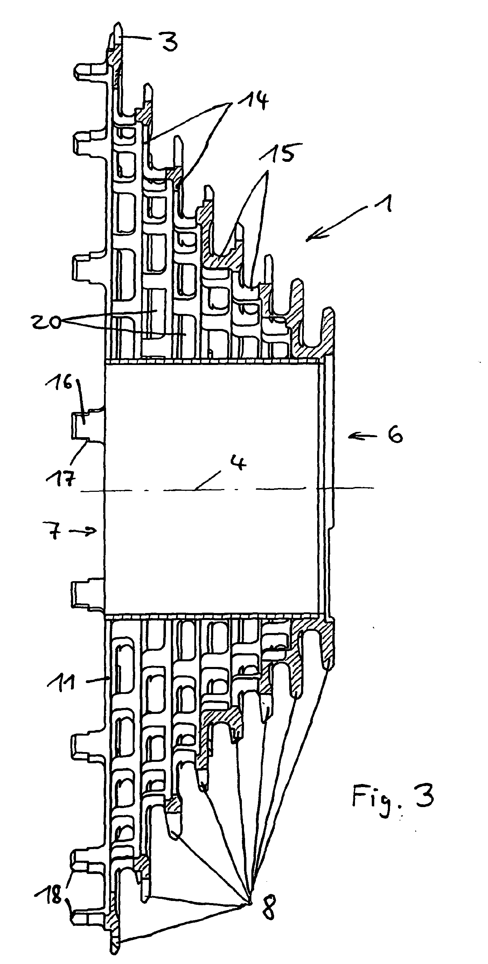

In Fig. 3 ist eine Ausrührungsform eines erfindungsgemäßen Hohlkörpers 1 gezeigt. Dieser Hohlkörper 1 ist ebenfalls aus scheibenförmigen 14 und rohrförmigen 15 Tragelementen aufgebaut, mit Öffnungen 6 und 7. Die Durchbrüche 20 im Hohlkörper 1 stellen eine Abwandlung gegenüber dem Hohlkörper aus dem Stand der Technik gemäß Fig. 1 und 2 dar. Dabei handelt es sich aber nicht um erfindungswesentliche Merkmale. Das erfindungsgemäße Prinzip ist auch auf einen Hohlkörper ohne Durchbrüche gemäß Fig. 1 und 2 anwendbar.

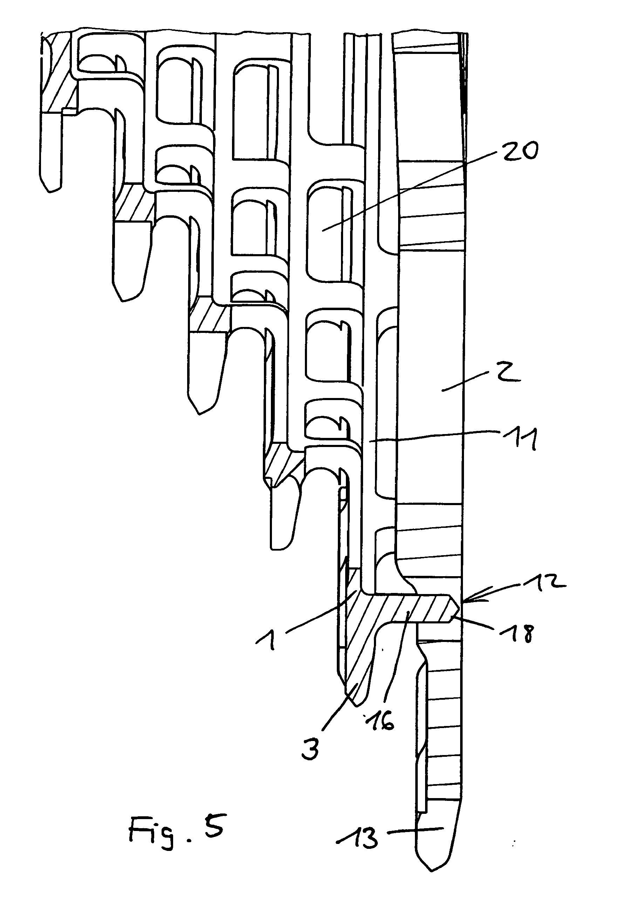

Die wesentlichen neuen Merkmale sind im Bereich der Öffnung 7 an der größeren Lagerbasis des Hohlkörpers 1 erkennbar. Statt eines Deckelelementes 23 ist nunmehr ein Übertragungselement 2 vorhanden, das an der Peripherie Zähne 13 aufweist. Weiterhin sind am Übertragungselement 2 Aussparungen 19 eingearbeitet. Diese Aussparungen 19 bilden mit Verbindungsstiften 17 im Bereich der Öffnung 7 am Hohlkörper 1 jeweils Fügeverbindungen 12, wie in Fig. 5 gezeigt. Dadurch sind die Zähne 3 am größten Ritzel am Hohlkörper 1 nunmehr in beiden axialen Richtungen mit einer Abstützung versehen, was die Stabilität erhöht und einem Neigen der Zähne 3 des größten Ritzels am Hohlkörper 2 in Richtung der Zähne am kleineren benachbarten Ritzel entgegen wirkt.

Ein Ringelement 11 ist zwischen den Verbindungsstiften 16 und dem größten Ritzel am Hohlkörper 1 angeordnet. Für eine gute Montierbarkeit eines Verbindungsstiftes 16 in einen Durchbruch 19 am Übertragungselement 2 weisen die Verbindungsstifte 16 Einführschrägen 18 auf. Um eine exakte axiale Position des Übertragungselementes 2 gegenüber dem Hohlkörper zu gewährleisten, weisen die Verbindungsstifte Anschläge 17 auf.

Mitnahmeelemente 25 an der innenliegenden Nabe 23 des Übertragungselementes 2 dienen der Weiterleitung des Drehmomentes zur Antreiberanordnung 5.

Der Querschnitt eines Verbindungsstiftes ist dem Querschnitt der Aussparung 19 am Übertragungselement angepasst. Er weist vier Ecken, zwei parallel gegenüberliegende Seiten sowie zwei bogenförmige Seiten auf, wobei der Bogen Teil eines Umkreises durch die 4 Ecken ist und der Durchmesser des Umkreises dem Durchmesser der kreisförmigen Vertiefung entspricht.

Das Übertragungselement 2 weist Fenster 21 zum Zweck der Gewichtseinsparung auf. Die durch zwei benachbarte Fenster 21 gebildeten Arme sind von radial innen nach außen entgegen der Antriebsdrehrichtung A geneigt. Dadurch sind sie beim Wirken eines Antriebsdrehmomentes auf Druck belastet und der außen liegende Zahnring 24 wird aufgeweitet. Damit wird der Zahnring 24 in sich stabilisiert und nicht auf Knickung beansprucht.

Weitere mögliche Ausgestaltungen sind möglich. Zum Beispiel können der kegelförmige Hohlkörper und das Übertragungselement mittels umlaufender Nuten und Wülste, die ineinander eingreifen, miteinander verbunden werden und eine Fügeverbindung bilden.

Weiterhin kann sich eine Einführschräge alternativ an der Aussparung 19 am Übertragungselement 2 befinden.

Es ist für die Übertragung des Drehmomentes zur Antreiberanordnung 5 auch ausreichend, nur an der Hohlkörper-Basis nahe der zweiten Öffnung 7 Mitnahmeelemente anzuordnen.

## Patentansprüche

1. Mehrfach-Ritzelanordnung für die Montage an einer Antreiberanordnung (5) an einem Fahrrad, die enthält:
einen kegelförmigen Hohlkörper (1) mit einer ersten Öffnung (6) benachbart zu einer kleinen Hohlkörper-Basis und einer zweiten Öffnung (7) benachbart zu einer großen Hohlkörper-Basis, wobei die Öffnungen (6, 7) koaxial zur Mittelachse (4) des Hohlkörpers (1) sind;
eine Vielzahl von mit Zähnen besetzten Ritzeln (8) unterschiedlicher Zähnezahlen, die sich radial nach außen in Bezug auf die Mittelachse (4) des Hohlkörpers (1) erstrecken; ein Mitnahmeprofil (9) an der großen oder an der kleinen Hohlkörper-Basis zur Übertragung eines Drehmomentes vom Hohlkörper (1) zur Antreiberanordnung (5); Abstützprofile (10) an den Hohlkörper-Basen,
ein Übertragungselement (2) an der großen Hohlkörper-Basis zur radialen Abstützung des Hohlkörpers (1), wobei eine Fügeverbindung (12) zwischen großer Hohlkörper-Basis und Übertragungselement (2) besteht,
dass das Übertragungselement (2) an seiner radial äußeren Peripherie Zähne (13) zum Eingriff mit einer Rollenkette aufweist
**dadurch gekennzeichnet,**
**dass** die Ritzel 8 und der Hohlkörper 1 einstückig ausgebildet sind
und **dass** zwischen dem Übertragungselement (2) und dem größten Ritzel am Hohlkörper (1) ein Ringelement (11) einstückig angeordnet ist.

2. Mehrfach-Ritrelanordnung nach Anspruch 1,
**dadurch gekennzeichnet**,
das das Übertragungselement (2) im Zentrum eine Öffnung aufweist mit Mitnahmeelementen (25) zur Übertragung eines Drehmomentes auf die Antreiberanordnung (5).

3. Mehrfach-Ritzelanordnung nach Anspruch 1,
**dadurch gekennzeichnet,**
**dass** eine Fügeverbindung (12) zwischen Verbindungsstiften 16 am Ringelement (11) und Aussparungen (19) am Übertragungselement (2) besteht, in der der Verbindungsstift (16) auch nach radial außen abgestützt wird.

4. Mehrfach-Ritzelanordnung nach Anspruch 3,
**dadurch gekennzeichnet,**
**dass** zwischen Verbindungsstift (16) und Aussparung (19) am Übertragungselement (2) eine Pressverbindung besteht.

5. Mehrfach-Ritzelanordnung nach Anspruch 3 oder 4,
**dadurch gekennzeichnet,**
**dass** die Aussparungen (19) am Übertragungselement (2) einen kreisförmigen Querschnitt haben.

6. Mehrfach-Ritzelanordnung nach Anspruch 3 oder 4,
**dadurch gekennzeichnet,**
**dass** eine Einführschräge (18) am Verbindungsstift (16) angeordnet ist.

7. Mehrfach-Ritzelanordnung nach Anspruch 3 oder 4,
**dadurch gekennzeichnet,**
**dass** der Querschnitt eines Verbindungsstiftes (16) vier Ecken, zwei parallele gegenüberliegende Seiten sowie zwei Seiten mit bogenförmigem Verlauf aufweist, wobei der bogenförmige Verlauf dem Umkreis durch die 4 Ecken folgt und der Durchmesser des Umkreises dem Durchmesser der kreisförmigen Aussparung (19) entspricht.

8. Mehrfach-Ritzelanordnung nach Anspruch 3 oder 4,
**dadurch gekennzeichnet,**
**dass** der Verbindungsstift (16) einen Anschlag (17) aufweist, wodurch ein vorbestimmter Abstand zwischen den Zähnen (3) am größten Hohlkörper-Ritzel und den Zähnen (13) am Übertragungselement (2) erzielt wird.

9. Mehrfach-Ritzelanordnung nach Anspruch 1 oder 2,
**dadurch gekennzeichnet,**
**dass** das Übertragungselement 2 Fenster (21) aufweist.

10. Mehrfach-Ritzelanordnung nach Anspruch 9,
**dadurch gekennzeichnet,**
**dass** in Umfangsrichtung benachbarte Fenster (21) durch Arme (22) getrennt sind, die gegenüber der radialen Richtung von innen nach außen entgegen der Antriebsdrehrichtung A des Ritzelsatzes geneigt sind.

## Claims

1. Multiple sprocket arrangement for mounting on a driver arrangement (5) on a bicycle, said multiple sprocket arrangement including:
a conical hollow body (1) having a first opening (6) adjacent to a small hollow-body base and a second opening (7) adjacent to a large hollow-body base,
wherein the openings (6, 7) are coaxial with a central axis (4) of the hollow body (1);
a multiplicity of toothed sprockets (8) having different numbers of teeth, said sprockets (8) extending radially outwards in relation to the central axis (4) of the hollow body (1);
a driving profile (9) on the large or on the small hollow-body base for transmitting a torque from the hollow body (1) to the driver arrangement (5);
supporting profiles (10) on the hollow-body bases;
a transmission element (2) on the large hollow-body base for radially supporting the hollow body (1), wherein there is a joint (12) between the large hollow-body base and the transmission element (2);
wherein the transmission element (2) has teeth (13) on its radially outer periphery for engaging with a roller chain,
**characterized**
**in that** the sprocket (8) and the hollow body (1) are formed integrally,
and **in that** an annular element (11) is integrally arranged between the transmission element (2) and the largest sprocket on the hollow body (1).

2. Multiple sprocket arrangement according to Claim 1,
**characterized**
**in that** the transmission element (2) has an opening in the centre, having driving elements (25) for transmitting a torque to the driver arrangement (5).

3. Multiple sprocket arrangement according to Claim 1,
**characterized**
**in that** there is a joint (12) between connecting pins (16) on the annular element (11) and recesses (19) on the transmission element (2), the connecting pin (16) also being supported radially towards the outside in said joint (12).

4. Multiple sprocket arrangement according to Claim 3,
**characterized**
**in that** there is a press connection between the connecting pin (16) and the recess (19) on the transmission element (2).

5. Multiple sprocket arrangement according to Claim 3 or 4,
**characterized**
**in that** the recesses (19) on the transmission element (2) have a circular cross section.

6. Multiple sprocket arrangement according to Claim 3 or 4,
**characterized**
**in that** an introduction slope (18) is arranged on the connecting pin (16).

7. Multiple sprocket arrangement according to Claim 3 or 4,
**characterized**
**in that** the cross section of a connecting pin (16) has four corners, two parallel opposite sides and two sides having a curved profile, wherein the curved profile follows the circumscribed circle through the four corners and the diameter of the circumscribed circle corresponds to the diameter of the circular recess (19).

8. Multiple sprocket arrangement according to Claim 3 or 4,
**characterized**
**in that** the connecting pin (16) has a stop (17), by way of which a predetermined spacing between the teeth (3) on the largest hollow-body sprocket and the teeth (13) on the transmission element (2) is achieved.

9. Multiple sprocket arrangement according to Claim 1 or 2,
**characterized**
**in that** the transmission element (2) has windows (21).

10. Multiple sprocket arrangement according to Claim 9,
**characterized**
**in that** windows (21) that are adjacent in the circumferential direction are separated by arms (22) which are inclined from inside to outside with respect to the radial direction, counter to the drive direction of the rotation A of the sprocket set.

## Revendications

1. Ensemble de pignons multiples pour le montage sur un ensemble d'entraînement (5) sur une bicyclette, qui comporte :
un corps creux (1) conique doté d'une première ouverture (6) adjacente à une petite base du corps creux et d'une deuxième ouverture (7) adjacente à une grande base du corps creux, les ouvertures (6, 7) étant coaxiales à l'axe médian (4) du corps creux (1) ;
une pluralité de pignons (8) garnis de dents présentant différents nombres de dents, lesquels pignons s'étendent radialement vers l'extérieur par rapport à l'axe médian (4) du corps creux (1) ;
un profilé d'entraînement (9) au niveau de la grande ou de la petite base du corps creux en vue de la transmission d'un couple du corps creux (1) à l'ensemble d'entraînement (5) ;
des profilés de support (10) au niveau des bases du corps creux,
un élément de transmission (2) au niveau de la grande base du corps creux en vue du support radial du corps creux (1), une liaison d'assemblage (12) étant présente entre la grande base du corps creux et l'élément de transmission (2),
l'élément de transmission (2) comprenant, au niveau de sa périphérie radialement extérieure, des dents (13) destinées à s'engrener avec une chaîne à rouleaux,
**caractérisé en ce que**
les pignons (8) et le corps creux (1) sont réalisés d'une seule pièce,
et **en ce qu'**un élément annulaire (11) est disposé d'une seule pièce entre l'élément de transmission (2) et le plus grand pignon sur le corps creux (1).

2. Ensemble de pignons multiples selon la revendication 1,
**caractérisé en ce que**
l'élément de transmission (2) comporte en son centre une ouverture avec des éléments d'entraînement (25) en vue de la transmission d'un couple à l'ensemble d'entraînement (5).

3. Ensemble de pignons multiples selon la revendication 1,
**caractérisé en ce**
**qu'**il existe une liaison d'assemblage (12) entre des goupilles de liaison (16) sur l'élément annulaire (11) et des cavités (19) sur l'élément de transmission (2), dans laquelle liaison d'assemblage la goupille de liaison (16) est également supportée radialement vers l'extérieur.

4. Ensemble de pignons multiples selon la revendication 3,
**caractérisé en ce**
**qu'**il existe une liaison à ajustement serré entre la goupille de liaison (16) et la cavité (19) sur l'élément de transmission (2).

5. Ensemble de pignons multiples selon la revendication 3 ou 4,
**caractérisé en ce que**
les cavités (19) sur l'élément de transmission (2) possèdent une section transversale circulaire.

6. Ensemble de pignons multiples selon la revendication 3 ou 4,
**caractérisé en ce**
**qu'**un biseau d'introduction (18) est disposé sur la goupille de liaison (16).

7. Ensemble de pignons multiples selon la revendication 3 ou 4,
**caractérisé en ce que**
la section transversale d'une goupille de liaison (16) comprend quatre coins, deux côtés opposés parallèles ainsi que deux côtés présentant une allure de forme courbe, l'allure de forme courbe suivant le cercle circonscrit passant par les quatre coins et le diamètre du cercle circonscrit correspondant au diamètre de la cavité circulaire (19).

8. Ensemble de pignons multiples selon la revendication 3 ou 4,
**caractérisé en ce que**
la goupille de liaison (16) comprend une butée (17), de telle sorte qu'une distance prédéfinie soit obtenue entre les dents (3) sur le plus grand pignon du corps creux et les dents (13) sur l'élément de transmission (2).

9. Ensemble de pignons multiples selon la revendication 1 ou 2,
**caractérisé en ce que**
l'élément de transmission (2) comprend des évidements (21).

10. Ensemble de pignons multiples selon la revendication 9,
**caractérisé en ce que**
des évidements (21) adjacents dans la direction périphérique sont séparés par des bras (22) qui sont inclinés, par rapport à la direction radiale, de l'intérieur vers l'extérieur dans le sens inverse au sens de rotation d'entraînement A du jeu de pignons.
